# EUROPÄISCHE PATENTANMELDUNG

(11) **EP 0 715 886 A1**
(43) Veröffentlichungstag der Anmeldung: **12.06.1996**
(21) Anmeldenummer: 95119440.6
(22) Anmeldetag: 08.12.1995
(51) Int. Cl.: B01J 8/02, F28D 15/02, C01B 17/80

(54) **Vorrichtung und Verfahren zur Durchführung exothermer Reaktionen**

(30) Priorität: 08.12.1994 DE 4443774
(71) Anmelder: BASF AKTIENGESELLSCHAFT, D-67056 Ludwigshafen (DE)
(72) Erfinder: Deck, Heribert, D-76287 Rheinstetten (DE)
(74) Vertreter: Geissler, Bernhard, Dr.

(57) **Zusammenfassung**

Die vorliegende Erfindung betrifft eine Vorrichtung und ein Verfahren zur Durchführung exothermer Reaktionen unter Anwesenheit eines Katalysators, insbesondere zur Oxidation von Schwefeldioxid zu Schwefeltrioxid, und ist dadurch gekennzeichnet, daß mindestens ein mindestens teilweise in der Reaktionszone, insbesondere in dem Katalysatormaterial angeordnetes Wärmerohr zur Abführung von Reaktionswärme aus der Reaktionszone, insbesondere aus dem Katalysatormaterial vorgesehen ist.

## Beschreibung

Die vorliegende Erfindung betrifft eine Vorrichtung und ein Verfahren zur Durchführung exothermer Reaktionen unter Anwesenheit eines Katalysators, insbesondere eine Vorrichtung und ein Verfahren zur Oxidation von Schwefeldioxid zu Schwefeltrioxid.

Bei katalysierten exothermen Reaktionen wie der Oxidation von SO₂ zu SO₃ heizt sich das in der Reaktionszone befindliche Katalysatormaterial stark auf. Da der Stoffumsatz bei adiabater Prozeßführung erheblich niedriger ist als bei isothermem Verfahrensablauf, ist es vorteilhaft, die Reaktionswärme aus der Reaktionszone, insbesondere aus dem Katalysatormaterial während der Reaktion abzuführen. Andernfalls muß der noch nicht umgesetzte Teil der Reaktanden in der Folge weiteren Verfahrensstufen zugeführt werden.

Es ist somit zur Erreichung des Gleichgewichtsumsatzes notwendig, mehrere Reaktions- und Abkühlungsschritte nacheinander durchzuführen. Dazu werden mehrere Reaktionszonen und Wärmetauscher seriell und alternierend angeordnet. Nachteilig ist dabei der hohe apparative Aufwand.

Zur besseren Wärmeabfuhr kann die exotherme Reaktion in Rohren stattfinden, die mit dem Katalysatormaterial gefüllt und an ihrer Außenseite gekühlt sind. Nachteilig ist dabei der gegenüber dem durchströmten Katalysatorbett erhöhte Druckverlust bei der Durchströmung der katalysatorgefüllten Reaktionsrohre, der entweder durch eine Reduzierung der Strömungsgeschwindigkeit in den Rohren oder durch die Anbringung mehrerer paralleler Rohranordnungen vermindert werden kann. Im ersten Fall vermindert sich aber der zu erzielende Mengendurchsatz erheblich. Bei der Verwendung mehrerer paralleler Rohrsysteme muß hingegen mit deutlich größeren Anlagen operiert werden.

Das US-Patent 1,685,672 beschreibt einen anderen Weg der Wärmeabfuhr. In einem Katalysatorbett werden Rohre angeordnet, die von dem zur Reaktion bestimmten Gas durchströmt werden. Das frisch zugeführte Gas nimmt die Reaktionswärme aus dem Katalysatorbett auf und strömt dann durch das Katalysatormaterial. Nachteilig bei dieser Anordnung ist die Einstellung einer ungleichmäßigen Temperaturverteilung im Katalysatorbett mit der Folge eines lokal ungleichmäßigen Stoffumsatzes. Außerdem ist der Wärmeübergang zu gasförmigen Kühlstoffen schlechter als zu flüssigen Substanzen.

Nach der deutschen Patentanmeldung DE 30 50 368 werden verschiedene Katalysatorbetten alternierend durchströmt, so daß sie sich abwechselnd immer wieder abkühlen können. Nachteilig ist dabei wiederum der große apparative Aufwand, insbesondere auch für gasdichte Umschaltarmaturen.

Ein gleichmäßiger Stoffumsatz läßt sich außerdem in einem Wirbelschichtreaktor erreichen, wie er in der deutschen Offenlegungsschrift 19 40 168 und DE 30 22 814 beschrieben ist. Dabei werden die Reaktanden und das Katalysatormaterial zu einem Wirbelbett fluidisiert, so daß der Wärme- und Stoffaustausch zwischen dem Katalysatormaterial und den Reaktanden verbessert wird. Die Wirbelschicht wird dabei auf konventionelle Weise gekühlt. Nachteilig bei diesem Vorgehen ist der zur Erzeugung der Wirbelschicht notwendige Energieaufwand und der erhöhte Katalysatorabrieb, der nicht nur zu einem höheren Verbrauch an Katalysator, sondern auch zur Verunreinigung des gasförmigen Reaktionsproduktes führt.

Aufgabe der Erfindung ist somit die Bereitstellung einer Vorrichtung und eines Verfahrens zur Durchführung exothermer Reaktionen, insbesondere zur Oxidation von Schwefeldioxid zu Schwefeltrioxid, wobei auf einfache, gleichmäßige Weise und bei möglichst niederem Druckverlust die Reaktionswärme aus dem Katalysatormaterial abgeführt werden soll, um einen möglichst isothermen Verfahrensablauf zu gewährleisten.

Die erfindungsgemäße Aufgabe wird durch die in den Patentansprüchen beschriebene Vorrichtung gelöst. Die erfindungsgemäße Vorrichtung zur Durchführung exothermer Reaktionen unter Anwesenheit eines Katalysators, insbesondere zur Oxidation von Schwefeldioxid zu Schwefeltrioxid, weist folgende Bestandteile auf: einen Behälter zur Aufnahme des Katalysatormaterials, Zuführungseinrichtungen für die Zuführung von Reaktanden in den Behälter, und Abführungseinrichtungen für die Abführung von Reaktionsprodukten aus dem Behälter. Die Vorrichtung ist gekennzeichnet durch mindestens ein Wärmerohr zur Abführung von Reaktionswärme aus der Reaktionszone, insbesondere aus dem Katalysatormaterial. Dabei muß ein Wärmerohr mindestens teilweise in der Reaktionszone, vorzugsweise in dem Katalysatormaterial in dem Behälter angeordnet sein.

Ein Wärmerohr ist ein gasdicht verschlossenes Rohr, das mit einer verdampfbaren Flüssigkeit mit hoher Verdampfungswärme gefüllt ist. Grundsätzlich können zwei verschiedene Ausführungsformen unterschieden werden. Das Kapillarwärmerohr weist an der Innenseite des Rohres eine Kapillarstruktur zur Aufnahme der verdampfbaren Transportflüssigkeit auf. Wärme, die dem Wärmerohr an einem Ende zugeführt wird, führt zur Verdampfung der Flüssigkeit aus den Kapillaren. Der Dampf strömt zum kälteren Ende des Wärmerohres, wo er an den Wänden des Rohres kondensiert. Aufgrund des Kapillareffektes wird die Flüssigkeit in der Kapillarstruktur in die wärmere Zone des Wärmerohres zurücktransportiert. Damit kann ein erneuter Wärmetransportvorgang beginnen.

Gravitationswärmerohre verzichten auf die Kapillarstruktur und bewerkstelligen den Wärmetransport durch das Aufsteigen des dampfförmigen Transportmediums und das Absinken des flüssigen Transportmaterials aufgrund der Schwerkraft. Nachteil der Gravitationswärmerohre ist allerdings, daß sie nur senkrecht bzw. mit erheblicher Neigung gegen die Waagerechte eingesetzt werden können. Wärmerohre und ihre Verwendung sind in dem Artikel von Groll, "Grundlagen und Anwendungen des Wärmerohres", Naturwissenschaften 67, 72 - 79 (1980) beschrieben.

Bevorzugt ist eine Vorrichtung, bei der mindestens ein Wärmerohr derart ausgebildet und in der Vorrichtung angeordnet ist, daß die aus der Reaktionszone, insbesondere aus dem Katalysatormaterial abgeführte Wärme ganz oder teilweise an einen oder mehrere Reaktanden oder das Reaktionsgemisch abgegeben wird, bevor dieses dem Katalysatormaterial zugeführt wird.

Vorzugsweise ist mindestens ein Wärmerohr vorgesehen, das an seiner Außenseite eine Berippung oder Bestiftung aufweist. Wesentlich ist dabei, daß die Fläche zur Wärmeabgabe vergrößert wird. Weiter bevorzugt ist eine Vorrichtung mit mindestens einem Wärmerohr, das ein Alkalimetall, Quecksilber oder Schwefel als Wärmetransportmaterial enthält. Schwefel hat insbesondere während der Oxidation von SO₂ den Vorteil, daß bei einem Ausströmen der Füllung des Wärmerohres keine gefährlichen Reaktionen zu erwarten sind. Außerdem ist Schwefel bis zu hohen Temperaturen flüssig (Tₛ = 444,6 °C), so daß ein guter Wärmeübergang auch bei hohen Reaktionstemperaturen erreicht werden kann.

Die Aufgabe, ein Verfahren zur Durchführung exothermer Reaktionen bereitzustellen, bei dem auf einfache, gleichmäßige Weise bei möglichst niederem Druckverlust die Reaktionswärme aus dem Katalysatormaterial abgeführt werden kann, wird durch das in den Ansprüchen beschriebene Verfahren gelöst. Dieses erfindungsgemäße Verfahren zur Durchführung exothermer Reaktionen unter Anwesenheit eines Katalysators, insbesondere zur Oxidation von Schwefeldioxid zu Schwefeltrioxid, ist dadurch gekennzeichnet, daß die in der Reaktionszone bzw. in dem Katalysatormaterial entstehende Reaktionswärme mit Hilfe mindestens eines Wärmerohres abgeführt wird.

Vorzugsweise wird die aus der Reaktionszone bzw. aus dem Katalysatormaterial abgeführte Wärme ganz oder teilweise an einen oder mehrere Reaktanden oder an das Reaktionsgemisch abgegeben, bevor dieses dem Katalysatormaterial zugeführt wird.

Bevorzugt ist die Verwendung von mindestens einem Wärmerohr, das an seiner Außenseite eine Berippung oder Bestiftung aufweist. Vorzugsweise wird mindestens ein Wärmerohr verwendet, das ein Alkalimetall, Quecksilber oder Schwefel als Wärmetransportmaterial enthält.

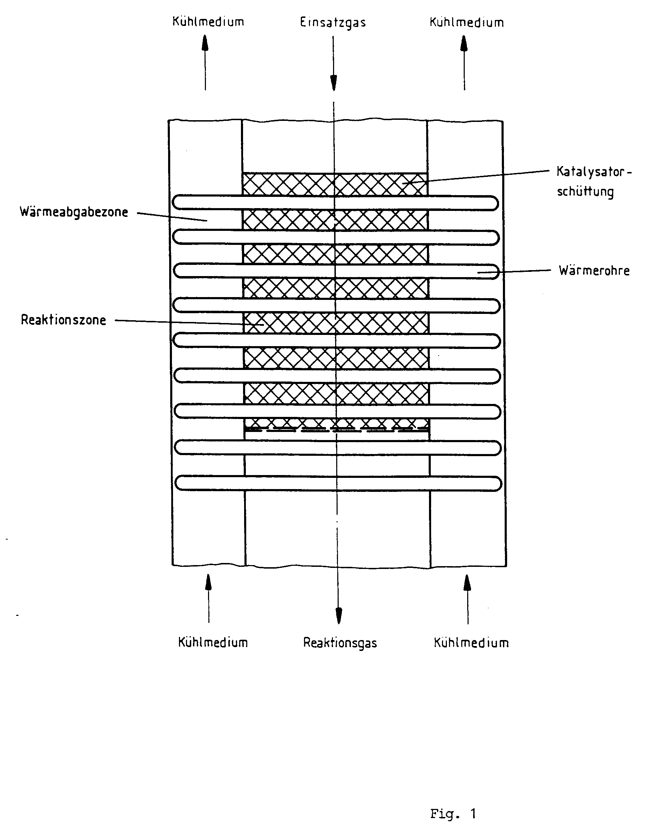

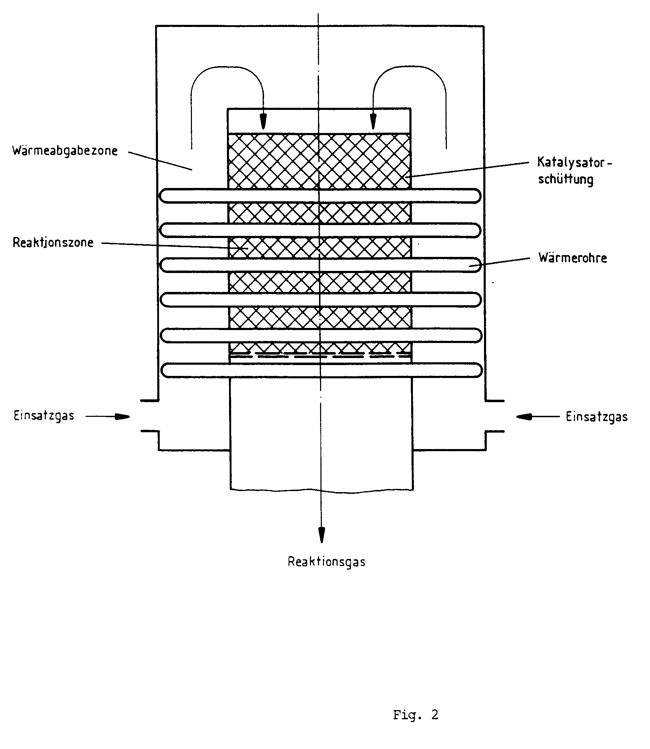

Das erfindungsgemäße Prinzip wird anhand der Fig. 1 und 2 im folgenden kurz erläutert. Beide Figuren zeigen das Prinzip einer erfindungsgemäßen Vorrichtung.

In Fig. 1 strömt Einsatzgas in den Behälter mit der Katalysatorschüttung. Bei der Reaktion entstehende Wärme wird über die Wärmerohre in die Wärmeabgabezone außerhalb des Behälters abgeführt. Die aus der Reaktionszone bzw. der Katalysatorschüttung abgeleitete Wärme wird dort dem Wärmerohr auf konventionellem Weg wieder entzogen, z. B. durch Luft- oder Flüssigkeitskühlung. Dabei können Wärmerohre sowohl innerhalb der Katalysatorschüttung, als auch in der Reaktionszone außerhalb der Katalysatorschüttung angebracht werden.

In der Anordnung nach Fig. 2 wird das Einsatzgas an den außerhalb des Reaktionsbehälters liegenden Enden der Wärmerohre vorbeigeführt, so daß die Reaktanden vor der Zuführung zum Katalysatorbett weitgehend die gesamte abgeführte Reaktionswärme aufnehmen. Dadurch werden einerseits die Reaktanden auf die zum Zünden der Reaktion erforderliche Starttemperatur vorgewärmt, andererseits die Reaktionszone gekühlt und damit ein höherer Umsatz als bei adiabater Fahrweise erreicht.

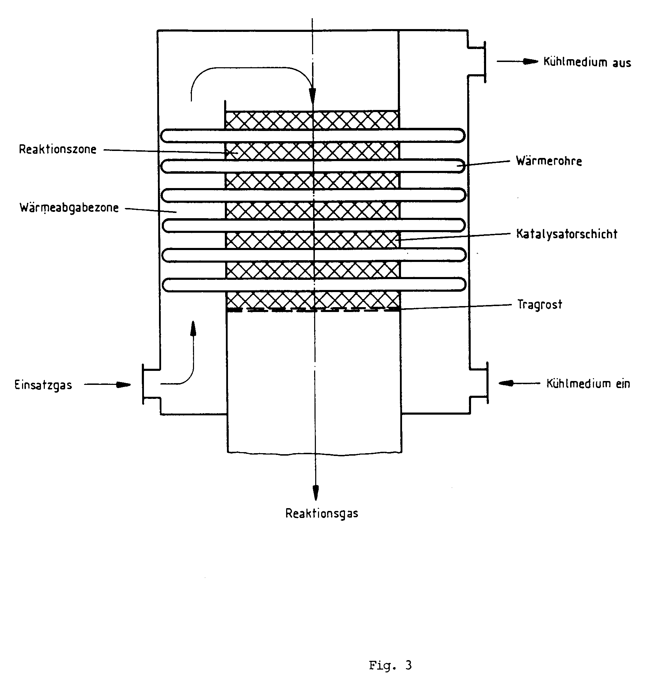

In der Anordnung nach Fig. 3 wird das Einsatzgas an den außerhalb des Reaktionsbehälters liegenden Enden der Wärmerohre vorbeigeführt, so daß die Reaktanden vor der Zuführung zum Katalysatorbett einen Teil der Reaktionswärme aufnehmen. Der andere Teil der Reaktionswärme wird an ein Kühlmedium abgeführt. In Abhängigkeit von den Verfahrensparametern kann mit einer derartigen Anordnung die Temperaturverteilung der Reaktionszone vorteilhaft beeinflußt werden. Auch bei unterschiedlicher Kühlung der Wärmerohrenden durch das Kühlmittel und das Einsatzgas entsteht entlang der Wärmerohre nur ein vernachlässigbar geringer Temperaturgradient.

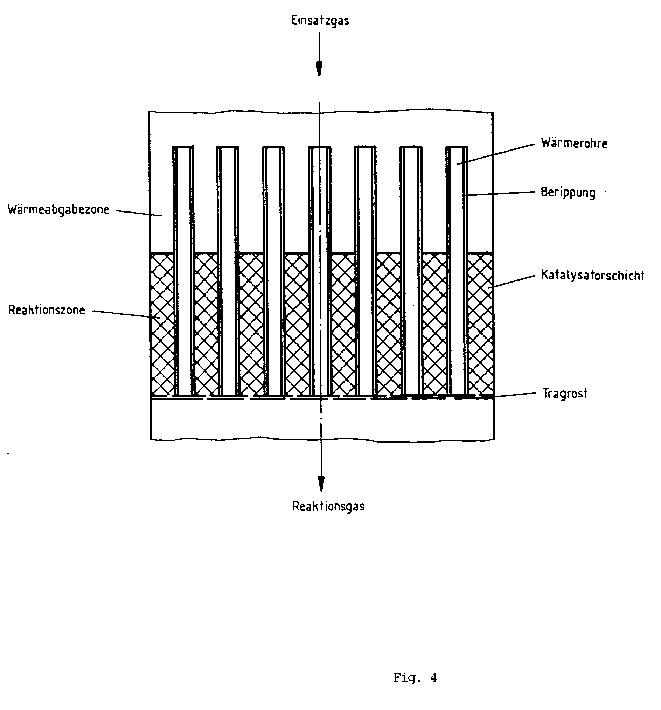

Die Fig. 4 zeigt eine Anordnung mit senkrecht stehenden Wärmerohren. Dabei können insbesondere Gravitationswärmerohre verwendet werden. Durch den Wärmetransport aus der Reaktionszone entgegen der Strömungsrichtung der Reaktanden werden diese auf die Starttemperatur der Reaktion vorgewärmt. Durch diese Anordnung kann die Eintrittstemperatur in das System deutlich niedriger als bei einer vergleichbaren adiabaten Reaktionsführung gehalten werden. Die erreichbaren Reaktionsumsätze hingegen sind größer als bei adiabater Reaktionsführung.

### Beispiel

Im praktischen Versuch wurde eine Anordnung nach Fig. 4 mit einem Reaktordurchmesser von 0,5 m und einer Schütthöhe des Katalysatormaterials von 1,5 m realisiert. Es wurden neun Wärmerohre mit 2,3 m Länge und 60,3 mm Außendurchmesser senkrecht in der Katalysatorschüttung angeordnet.

Die zugeführte Gasmischung bestand zu 25 Vol.% aus SO₂, zu 15 Vol.% aus Sauerstoff und zu 60 Vol.% aus Stickstoff. Der Gasvolumenstrom betrug 100 m³/h bei einem Druck von 1,05 bar. Die Eintrittstemperatur der Reaktanden betrug etwa 30°C, die Austrittstemperatur etwa 480°C. Das zugeführte Schwefeldioxid wurde zu 86% umgesetzt.

## Patentansprüche

1. Vorrichtung zur Durchführung exothermer Reaktionen unter Anwesenheit eines Katalysators, insbesondere zur Oxidation von Schwefeldioxid zu Schwefeltrioxid, wobei die Vorrichtung aufweist:
einen Behälter zur Aufnahme des Katalysatormaterials, Zuführungseinrichtungen für die Zuführung von Reaktanden in den Behälter, und
Abführungseinrichtungen für die Abführung von Reaktionsprodukten aus dem Behälter,
**gekennzeichnet durch**
mindestens ein mindestens teilweise in der Reaktionszone, insbesondere in dem Katalysatormaterial, in dem Behälter angeordnetes Wärmerohr zur Abführung von Reaktionswärme aus der Reaktionszone, insbesondere aus dem Katalysatormaterial.

2. Vorrichtung nach Anspruch 1, dadurch gekennzeichnet, daß mindestens ein Wärmerohr derart ausgebildet und in der Vorrichtung angeordnet ist, daß die aus der Reaktionszone, insbesondere aus dem Katalysatormaterial, abgeführte Wärme ganz oder teilweise an einen oder mehrere Reaktanden oder an das Reaktionsgemisch vor dessen Zufuhr zu dem Katalysatormaterial abgegeben wird.

3. Vorrichtung nach einem der vorhergehenden Vorrichtungsansprüche, gekennzeichnet durch mindestens ein Wärmerohr, das an seiner Außenseite eine Berippung oder Bestiftung aufweist.

4. Vorrichtung nach einem der vorhergehenden Vorrichtungsansprüche, gekennzeichnet durch mindestens ein Wärmerohr, das ein Alkalimetall, Quecksilber oder Schwefel als Wärmetransportmaterial enthält.

5. Verfahren zur Durchführung exothermer Reaktionen unter Anwesenheit eines Katalysators, insbesondere zur Oxidation von Schwefeldioxid zu Schwefeltrioxid, dadurch gekennzeichnet, daß die in der Reaktionszone, insbesondere in dem Katalysatormaterial entstehende Reaktionswärme mit Hilfe mindestens eines Wärmerohres abgeführt wird.

6. Verfahren nach Anspruch 5, dadurch gekennzeichnet, daß die aus der Reaktionszone, insbesondere aus dem Katalysatormaterial, abgeführte Wärme ganz oder teilweise an einen oder mehrere Reaktanden oder an das Reaktionsgemisch vor dessen Zufuhr zu dem Katalysatormaterial abgegeben wird.

7. Verfahren nach einem der vorhergehenden Verfahrensansprüche, dadurch gekennzeichnet, daß mindestens ein Wärmerohr verwendet wird, das an seiner Außenseite eine Berippung oder Bestiftung aufweist.

8. Verfahren nach einem der vorhergehenden Verfahrensansprüche, dadurch gekennzeichnet, daß mindestens ein Wärmerohr verwendet wird, das ein Alkalimetall, Quecksilber oder Schwefel als Wärmetransportmaterial enthält.
